# EUROPEAN PATENT SPECIFICATION

(11) **EP 1 734 017 B1**
(45) Date of publication and mention of the grant of the patent: **24.11.2010**
(21) Application number: 06011174.7
(22) Date of filing: 31.05.2006
(51) Int. Cl.: C03C 8/10

(54) **Manufacturing method of frits for antique tiles**
Produktionsmethode für antike Fliesen
Méthode de fabrication pour les tuiles antiques

(30) Priority: 06.06.2005 TR 200502115
(43) Date of publication of application: 20.12.2006
(73) Proprietor: TUBITAK-Turkiye Bilimsel ve Teknolojik ve Arastima Kurumu, Ataturk Bulvari No. 221 06100 Kavaklidere Ankara (TR)
(72) Inventor: Okyar, Fusun, P.K.21, 41470, Gebze/Kocaeli (TR)

(56) References cited:
- GB-A- 1 426 219
- PAYNTER S; OKYAR F; WOLF S; TITE M S: "The Production Technology of Iznik Pottery- a Reassessment" ARCHAEOMETRY, vol. 46, no. 3, 2004, pages 421-437, XP008076534
- STEFANOV S; BATSCHWAROV S: "Ceramic Glazes" 1988, BAUVERLAG , WIESBADEN , XP002425415 * pages 61,74,75 * * page 91 - page 107 * * page 169 - page 180 *
- OKYAR F: "The Technology of Frit Making in Iznik" KEY ENGINEERING MATERIALS, vol. 264-268, 2004, pages 2391-2394, XP008076533
- TITE M S; FREESTONE I; MASON S; MOLERA J; VENDRELL-SAZ M; WOOD N: "Lead Glazes in Antiquity- Methods of production and reasons for use" ARCHAEOMETRY, vol. 40, no. 2, 1998, pages 241-260, XP008076660
- TITE M S: "Iznik Pottery: An Investigation of the Methods of Production" ARCHAEOMETRY, vol. 31, no. 2, 1989, pages 115-132, XP008076661
- DATABASE WPI Week 198317 Derwent Publications Ltd., London, GB; AN 1983-41225K XP002425423 & SU 937 380 B (ALMA CONS MAT RES) 23 June 1982 (1982-06-23)
- DATABASE WPI Week 198223 Derwent Publications Ltd., London, GB; AN 1982-47848E XP002425424 & SU 857 033 B (ALMA-ATINSK CONS MA) 23 August 1981 (1981-08-23)
- DATABASE WPI Week 198950 Derwent Publications Ltd., London, GB; AN 1989-369656 XP002425425 & SU 1 488 267 A (BELO PROGRESS LOCAL) 23 June 1989 (1989-06-23)
- ROLDAN C; COLL J; FERRERO J L; JUANES D: "Identification of overglaze and underglaze cobalt decoration of ceramics from Valencia (Spain) by portable EDXRF spectrometry" X-RAY SPECTROMETRY, vol. 33, 2004, pages 28-32, XP002425414

## Description

### BACKGROUND OF THE INVENTION

### Technical Field of the Invention

This invention relates to manufacturing tin dioxide containing lead alkaline frits representing to antique tile glazes but having a low lead solubility.

### Description of the Prior Art

Although manufacturing of frits was done in many studies until today, tin dioxide containing transparent frit which is the main content of glazes used for coating of quartz based antique-like tile substrates and having low lead solubility values was not studied before.

In generally;
- method for manufacturing of coloured, opaque or transparent frit,
- method for manufacturing of frits grouped according to their oxide contents,
- properties according to their compositions
related patent studies were done.

US 6 436 857 patent document describes the method for inducing a refractive index change in a lead silicate glass material and irradiating the lead silicate glass material to increase the index of refraction. The method in said invention provides lead silicate materials having large, thermally stable photosensitivity. Lead silicate glass materials formed in said invention may be used in telecommunications, integrated optics and data storage technologies.

US 4 311 504 patent document describes a method for coating a glass, glass-ceramic, or ceramic body with a glaze including coloured frit exhibiting a bright coloration. Coloured frit said in the invention is lead-free and prepared to obtain yellow-to-brown colours by consisting Fe₂O₃ and bright red colour by consisting cadmium sulfoselenide. Thermally stable said colours can be fired onto glass, glass-ceramic and ceramic substrates at temperatures between about 700-950°C and a homogenous coating can be obtained.

In patent document JP 2001 302279, a lead-free, tin oxide including and low melting point glass manufacturing method is described. It is aimed to obtain glass capable of using for sealing, coating and capable of providing a burned product excellent in electrical insulating properties. The invention said in US 4232185 patent document, relates to an electrical insulator having a coating of a tin oxide-containing lead-free semi conductive glaze. JP 2000 239042 and JP 2001 048580 patent documents describe the method of manufacturing lead frits which is capable of being used as sealing glass for cathode ray tubes.

The invention said in patent document GB 982600 is concerned with conducting glazes for the control of the distribution of electrical potential over the surface of an article and hence reduction of the tendency to electrical discharge. The electrically conducting coating contains a mixture of tin dioxide and antimony pentoxide 25-45% by weight. The coating is useful for floor and wall tiles particularly for operating theatres and places where static electricity charges are likely.

US 2004 0084659 patent invention provides a semi conductive glaze product consisting of tin dioxide (SnO₂) and antimony oxide (Sb₂O₃) which exhibit low thermal expansion coefficient without adversely affecting other glaze characteristics and when applied to an insulator, attains enhanced mechanical strength of the insulator. It is used as an insulator material, which is coated with the produced semi conductive glaze.

In US 5 747 395 patent document, the invention relates to glass compositions including tin dioxide (SnO₂) and cobalt oxide (CoO. 5-15%w), which are of minimal toxicity and are substantially free of lead oxide (PbO). This can be used in producing ceramic paints, ceramic body and glaze, in earthenware and porcelains for the aim of decoration.

The invention said in US 6 043 171 patent document concerns lead-free glass compositions including tin dioxide (SnO₂) for glazing and decorating glass or glass-ceramics that contain high quartz. Although lead oxide (PbO) as a flux is generally used for providing good glaze-substrate bonding and reducing stress, other alternative materials are preferred because of its toxic properties. Boron oxide (B₂O₃) 10-27 % by weight is used for its viscosity lowering effect, silica (SiO₂), alumina (Al₂O₃) and reduced amounts of tin dioxide (SnO₂) 0-3 % by weight are used for the formation of glass network. Alternative materials for lead oxide (PbO) are boron oxide (B₂O₃), fluorine (F) and alkali oxides.

The present invention "Manufacturing method of frits for antique tiles" differs from US 6 043 171 patent by the way of providing a frit and glaze having the properties of similar composition with antique-like tile glazes, low lead releasing, high hardness properties.

Antique type frits and glazes are described for example in "The Technology of Frit Making in Iznik", Key Engineering materials Vols. 264-268 (2004) pp. 2391-2394, "Lead Glazes in Antiquity - Methods of Production and Reasons for Use", Archaeometry 40(2) (1998), pp. 241-260 and "The Production Technology of Iznik Pottery - A Reassessment", Archaeometry 46(3) (2004), pp. 421-437.

Frits containing tin dioxide (SnO₂) which are defined in the patent documents given above, are used with antimony oxide (Sb₂O₃) addition to control electrical properties instead of using them for antique aimed decoration. There has been no study about these kinds of frits being a main constituent of the prepared glaze, which is used to coat antique type (ex. Iznik Ceramics, Islamic Ceramics) tiles.

### TECHNICAL PROBLEM TO BE SOLVED

Nowadays, the composition of traditional frits used in manufacturing of antique type ceramics differs from the glaze composition of original antique tiles. The glaze composition, made by the frit defined in present patent, is similar with the composition of antique tile glazes when the comparison made according to the results which are obtained from the characterisation studies of antique tiles.
There is a great demand in ceramic, glass and glaze industry for manufacturing of ceramics of antique type museum quality.

### BRIEF DESCRIPTION OF THE INVENTION

The present patent document is related with the method of manufacturing frit which is used as a main component of the glaze that is compatible with antique tile glaze compositions for coating antique-like materials.

Tin dioxide (SnO₂) containing lead alkaline frits can be used in manufacturing of antique tiles and glazes of lead solubility in the permissible limit.

### DETAILED DESCRIPTION OF THE INVENTION

The present patent document is related with the method of manufacturing tin dioxide (SnO₂) containing lead alkaline frits having similar glaze composition as antique tile glazes.

The frit defined in this patent may be prepared by mixing together lead oxide, tin dioxide and a silica source and melting and if it is preferred the melted mixture may be poured directly into a cold water to make it easily grinding.

Lead alkaline frit including tin dioxide (SnO₂) of the present invention consists of 0-5 % dolomite (MgCO₃.CaCO₃), 5-7 % colourless cullet, 20-25 % sodium bicarbonate NaHCO₃), 30-40 % quartz or sand as silica (SiO₂) source, 0-3 % potassium carbonate (K₂CO₃) and 25-30 % red lead (Pb₃O₄) by weight. By weight, 1-5 % tin dioxide (SnO₂) and in trace amounts, CoO to give a light bluish appearance to the surface, are also added into the mixture.

Silica source may be either quartz or sand. Scrapped soda lime glass cullet as a source of glass is ground and used as glass powder. The grain size distribution of quartz and glass used in the mixture is respectively 100-225 µm and 30-100 µm. The mixture is melted at a temperature ranging from 1000 °C to 1250 °C for 3,5 h. The melted mixture may be poured directly into cold water to make it easily grinding.

A glaze which has similar properties with antique tile glazes is prepared from this produced frit. The glaze mixture is prepared after the frit was ball milled in the usual way. The produced frit consists 99 % by weight of dry content of the glaze mixture. The mixture's density and viscosity were adjusted respectively as 1,7-1,8 g/cm³ and 30-45 s with Ford cup 4 by adding both deflocculant and water. The homogenised glaze was applied by either spraying or dipping or pouring method onto a substrate which has a fitting thermal expansion coefficient. After drying, it is vitrified by firing at a temperature ranging from 900 °C to 960 °C and cooled down slowly.

Thermal expansion coefficients of produced frits are in the range of 10-15x10⁻⁶ /°C at 20-500 °C ; Tg (glass transition temperature) and Tm point (melting point) are 455 °C and 550 °C respectively.

The best compatibility (matching) between substrate and glaze is provided when the thermal expansion of coefficients of the substrate is in the range of 15-20x10⁻⁶/°C at 20-500 °C.

Lead solubility of frit and the glaze produced from this frit aforementioned is 0,2 mg/dm².

The measured Vickers micro hardness value is between 4,9-5,9 GPa.

Lead alkaline frit containing tin dioxide (SnO₂) is thought to be suitable for using in the glaze compositions of museum quality antique tiles with modern applications.

One of the application areas of this frit product is to use it in a glaze composition or as a glass component that is prepared for coating the floor and wall tiles of places where aesthetic appearance is demanded.

### EXAMPLES

Some examples were given below for the tin dioxide (SnO₂) containing lead alkaline frit and a colourless, transparent glaze which has a good chemical resistance. The mixture rates of some compositions which consist of glass, a silica source, red lead, dolomite, sodium bicarbonate, K₂CO₃, SnO₂ and CoO are given by weight below:

**% by weight**

| | Example 1 | Example 2 |
|---|---|---|
| Dolomite | 2,00 | - |
| Soda ash | 24,00 | 25,00 |
| Quartz | 37,00 | 38,00 |
| K₂CO₃ | 1,00 | - |
| Glass | 7,00 | 7,00 |
| Red lead | 29,00 | 30,00 |
| SnO₂ | 4,00 | 4,00 |

In the group Example 1-2, the silica source is quartz. CoO can be added in trace amounts. In both two examples, raw materials are mixed in the given amounts, then melted at a temperature ranging from 1000 °C to 1250 °C for 3,5 h. The melted mixture may be poured directly into cold water to make it easily grinding.

**% by weight**

| | Example 3 | Example 4 |
|---|---|---|
| Dolomite | 2,00 | - |
| Soda ash | 24,00 | 25,00 |
| Sand | 37,00 | 38,00 |
| K₂CO₃ | 1,00 | 1,00 |
| Glass | 7,00 | 7,00 |
| Red lead | 29,00 | 29,00 |
| SnO₂ | 4,00 | 4,00 |

In the group Example 3-4, the silica source is sand. CoO can be added in trace amounts. As a source of glass, scrap soda lime glass cullet (window glass, colourless cullet) is ground and used as glass powder. In both two examples, the raw materials as red lead, sand, potassium carbonate, sodium bicarbonate, dolomite (Example 3), glass and 3-4 % SnO₂ by weight are mixed in the given amounts, then melted at a temperature ranging from 1000 °C to 1250 °C for 3,5 h. The melted mixture may be poured directly into cold water to make it easily grinding.

Antique (ex. lznik Ceramics, Islarnic Ceramics) tiles have high amount of quartz content and low thermal expansion coefficient. Tin oxide (SnO₂) constituent of the frit increase the chemical durability and refractive index and gives a deeper appearance to the transparent glaze in decorated surfaces. Using in various glazes with various compatible substrates that have a suitable thermal expansion can enlarge the application area of this produced frit.

### METHOD FOR THE APPLICATION OF THE INVENTION TO THE INDUSTRY

Antique-like decorative ceramic materials which are coated with a glaze prepared from the frit defined in this patent, are used for decoration as a building material as both for interior and exterior coatings in tile forms.

Lead solubility of frit and glaze mentioned in this patent is 0.2mg/dm² which is in the permissible solubility limits. High chemical resistance and low lead solubility shows preference of these products without any disadvantages and makes it useful.

In present, the composition of traditional frits and glazes used in manufacturing of antique type ceramics differs from the frit and glaze composition of original antique tiles. Nowadays, it will be possible to use antique-like tiles by modernization and production of antique type museum quality ceramics. There is a great need for this in ceramic, glass, glaze and building industry and restoration studies.

## Claims

1. A manufacturing method for producing a transparent glaze for Iznik type antique tiles consist of having thermal expansion coefficient range of 10-15x10⁻⁶ /°C at 20-500 °C and being Tg point (glass transition temperature), Tm point (melting point) in the range of 450-465 °C and 550-565 °C respectively and having a density as 1,7-1,8 g/cm³ and viscosity as 30-45 s with Ford Cup 4, having low lead solubility value as 0,2 mg/dm² which is in the permissible solubility limit (≤ 2 mg/dm²) consisting of the following steps;
a. Producing a frit by mixing and melting the; 30-40 % quartz or sand as a silica source, 25-30 % red lead (Pb₃O₄) as a lead source, 20-25 % sodium bicarbonate (NaHCO₃), 5-7 % soda lime glass, 0-3 % potassium carbonate (K₂CO₃), 1-5 % tin dioxide (SnO₂), 0-5 % dolomite (MgCO₃. CaCO₃) by weight and CoO provide a light bluish appearance when applied to white surfaces, at a temperature in the range from 1000 °C to 1250 °C for 3-5 h
b. Mixing deffloculant, kaolin and water and adding them to the frit, for producing end product improved in order to being used as a glaze coating for antique tiles consists of 99 % frit with 1 % kaolin and deflocculant after dying.

## Patentansprüche

1. Fertigungsverfahren zur Herstellung einer transparenten Glasur für antike Keramikplatten der Iznik Art, bestehend aus einem thermischen Ausdehnungskoeffizienten im Bereich von 10 - 15x10⁻⁶ /°C bei 20-500°C mit einer Glasübergangstemperatur (T_{g}) im Bereich von 450 - 465 ° C und einer Schmelztemperatur (Tm) im Bereich von 550 - 565 ° C mit einer Dichte von 1,7 - 1,8 g/cm³ und einer Viskosität von 30-45 s mit einem Ford Cup 4, bei einem bleifreien Lösllchkeitswert von 0,2 mg/dm², welches im zulässigen Löslichkeitsbereich (≤2 mg/dm²) liegt, **dadurch gekennzeichnet dass** folgende Schritte ausgeführt werden,
a. Herstellung einer Glasfritte durch Vermischung und Verschmelzung von Quartz oder Sand als die Silica-Quelle, 25 - 30 % Mennige (Pb₃O₄) als Bleiquelle, 20 - 25 % Natriumhydrogencarbonat (NaHCo₃), 5 - 7 % Kalk-Natron-Glas, 0 - 3 % Kaliumcarbonat (K₂Co₃), 1 - 5 % Zinndioxid (SnO₂), 0 - 5 % Dolomit (MgCo_{3.}CaCo₃) an Gewicht und CoO um eine helles, leicht bläuliches Erscheinungsbild zu erzeugen, bei einer Tempratur im Bereich von 1000 - 1250 C für 3-5 h vermischen und warten.
b. Vermischung von Deflockulationsmittel, Kaolin und Wasser, diese werden mit der Glassfritte vermischt, um das optimierte Endprodukt herzustellen, damit dieses als Glasurbeschichtung für antike Keramikplatten genutzt wird; es besteht aus 99 % der Glassfrittenmischung und 1 % Kaolin und Deflockulationsmittel nach der Wartezeit.

## Revendications

1. La fritte alcaline plombifère est une méthode de production pour l'utiliser en tant qu'une couche de vernis tuiles (la glaçure) dans les carreaux, la fritte alcaline plombifère utilisé comme une couche de vernis (la glaçure) des carreaux avec un coefficient de dilatation thermique de 20-500 ° C, au point 10-15x10-6 /° C, le Tc (température de transition vitreuse) et Te (température de fusion), respectivement, 450-465 ° C et 550 - 565 ° C. La dilatation thermique de 20-500 ° C, 15-20x10-6 / ° C, avec l'une des méthodes soit le drainage, soit l'immersion ou la pulvérisation. Ensuite on le cuit lentement entre 900-960 ° C, ainsi la vitrification se réalise et on le fait refroidir. La température de transition vitreuse de la frite mentionnée dans les demandes précédentes (Tc), permet à la maturation de la glaçure faite de cette frite à une température plus basse de 1000 ° C. On prepare un mélange homogène en ajoutant du deflokülant et de l'eau dans un mélange de poussière en prenant la densité de 1,7 à 1,8 g/cm3 et la fluidité de 30-45 secondes avec la coupe Ford n ° 4. La résolution plombifère de la fritte et de la glaçure visées est de 0,2 mg/dm² et sa résolution est dans la limite des valeurs acceptables (≤ 2 mg/dm²).
a. La fritte alcaline plombifère est composé de la silice (SiO2) comme source de 30-40% en poids de quartz ou de sable, l'oxyde de plomb (PbO) comme source de 25-30% par sülyen poids (Pb3O4),% en poids 20-25 pour cent de bicarbonate de sodium (NaHCO3), 5-7% en poids de verre, de 0-3% en poids de carbonate de potassium (K2C03), le taux de 1-5% en poids de dioxyde d'étain (SnO2), le taux de 0-5% en poids de MgCO3CaCO3et le blanc bleuâtre lorsqu'il est appliqué à une couche de et de fritte pour donner une apparence d'oxyde de cobalt (CoO) et on obtient ce mélange en le fusionnant en chaleur de 1000-1250 ° C pendant 3-5 heures.
b. On ajoute de kaolin, du deflokülant et de l'eau dans le mélange pour préparer une couche de vernis (la glaçure) transparente fritte. Le poids de la composition de cette couche est de 99% de fritte alcaline de plomb, du kaolin et du deflokülant de 1%. La fritte et la glacure visées 5 forment une surface lumineuse et transparente conforme à la décoration convenable qui ne forme pas l'opacité.
